(19) **Europäisches Patentamt European Patent Office Office européen des brevets**

(11) **EP 3 345 314 B1**

(12) **EUROPEAN PATENT SPECIFICATION**

(45) Date of publication and mention of the grant of the patent:
**11.11.2020 Bulletin 2020/46**

(51) Int Cl.:
***H04B 10/079*** *(2013.01)*     ***H04B 10/2507*** *(2013.01)*
***H04B 10/61*** *(2013.01)*

(21) Application number: **15771570.7**

(22) Date of filing: **25.09.2015**

(86) International application number:
**PCT/EP2015/072171**

(87) International publication number:
**WO 2017/050396 (30.03.2017 Gazette 2017/13)**

(54) **PHASE RETRIEVAL FOR COMPENSATION OF CHROMATIC DISPERSION-INDUCED INTER-SYMBOL INTERFERENCE**

PHASENBESTIMMUNG ZUR KOMPENSATION VON DURCH FARBDISPERSION INDUZIERTEN STÖRUNGEN ZWISCHEN SYMBOLEN

EXTRACTION DE PHASE POUR LA COMPENSATION D'INTERFÉRENCE INTER-SYMBOLES INDUITE PAR UNE DISPERSION CHROMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.07.2018 Bulletin 2018/28**

(73) Proprietor: **Huawei Technologies Co., Ltd.**
**Longgang District**
**Shenzhen, Guangdong 518129 (CN)**

(72) Inventors:
• **GOEGER, Gernot**
  **80992 Munich (DE)**
• **YE, Yabin**
  **80992 Munich (DE)**
• **PRODANIUC, Cristian**
  **80992 Munich (DE)**

(74) Representative: **Körber, Martin Hans**
**Mitscherlich PartmbB**
**Patent- und Rechtsanwälte**
**Sonnenstrasse 33**
**80331 München (DE)**

(56) References cited:
**US-A1- 2013 071 119**     **US-A1- 2014 308 046**

**Description**

TECHNICAL FIELD

The present invention relates to the technical field of data transmission apparatuses. In particular, the invention relates to a receiver which is configured for receiving optical signals via an optical transmission channel, to a system for transmitting optical signals, and to a method for determining a phase of a received optical signal.

BACKGROUND

High data rate optical network connections may be more and more limited in reach by fiber chromatic dispersion (CD). Many means exist to deal with CD, some of them introduce additional optical hardware, or transmitter and/or receiver-side modifications.

Steadily increasing optical single channel data rates may drive even metro network transmission into chromatic dispersion (CD) limitations by emerging inter-symbol interference (ISI). For example, the reach of 25Gbits/s NRZ-OOK (non return-to-zero on-off keying) channels may be limited to distances of less than 25 km over standard single mode fiber (SSMF). To achieve target distances of typically 50 to 100km with those data rates, new cost effective methods may have to be introduced.

To achieve those target distances, a variety of methods exists or has been proposed to deal with CD:
One of these methods is providing additional optical elements, namely dispersion compensation with fiber Bragg gratings (FBG) or dispersion compensation fibers (DCF):
Applying the inverse CD of the fiber traversed mitigates signal distortions. However those components require some space on the TX/RX board (transmitter/receiver board), they may introduce additional loss of a few dB and they are not tunable so only applicable to a fixed point-to-point connection. Tunable dispersion compensation devices based on FBGs or cascaded Mach-Zehnder interferometers are even more costly and usually have a tuning range of less than +/-20km SSMF. Optical Phase Conjugation (OPC) at half CD value of the transmission line allows restoring CD-induced ISI and even nonlinear fiber effects, but may be very hardware intense and may require much computational power.

Another approach can be applying measures at the transmitter (TX). Pre-distortion as the inverse transfer function of a linear dispersive element such as a fiber of certain length can be calculated easily, it can be applied at TX side onto the signal to be received at the receiver (RX) side. The dispersion pre-compensated electrical field usually exhibits varying phase. That's why more expensive modulators for both in-phase (I) and quadrature-phase (Q) are necessary. Other methods utilize the freedom for the phase at the direct-detection thus square-law RX and try to optimize current for directly modulated lasers (DML) to achieve dispersion supported transmission with specific target distance by employing particle swarm base optimization, or relate to reading pattern dependent currents from a pre-calculated look-up-table. Another method to set amplitude and phase of the optical field is to operate a DML (mainly for phase) and a subsequent electro-absorption modulator (EAM, mainly for amplitude modulation) synchronously and by bit pattern dependent LUT entries. However, these methods above are complex, need feedback information about link dispersion properties and pre-calculated target settings for each link CD value.

Another approach for dealing with CD relates to dispersion tolerant modulation formats. Optical duobinary (ODB) and quite similar phase-shaped binary transmission (PSBT) utilize phase changes of $\pi$ during dedicated space symbols reducing ISI by destructive interference of temporally overlapping dispersion broadened marks without requiring modifications at RX side. These phase changes render modulation essentially multi-level with regard to the complex optical field. Usually phase reversal requires a Mach-Zehnder modulator (MZM). Another method for impressing phase changes onto the optical field has also been demonstrated, employing the phase-to-amplitude transforming properties of an optical filter: The spectrum of an appropriately (with low extinction ratio) directly modulated laser which is broadened by adiabatic chirp can be shaped by an optical bandpass filter introducing deep trenches at spaces and phase steps in between marks and spaces (chirp managed laser, CML). Here, spectral bandpass transition wavelength and DML center frequency may have to be aligned very accurately and stable. Positive real-valued multi-level modulation such as pulse amplitude modulation (PAM) can achieve same bit rate at lower symbol rate thus being less sensitive to CD at the expense of higher susceptibility to noise.

Another method to achieve larger CD tolerance consists of removal of one of the sidebands of real valued optical signals by applying signal and Hilbert transform of the signal, respectively, at the ports of a dual drive MZM, or by simply cutting the sideband by a precise optical bandpass filter after the modulator (single side-band modulation, SSB). Then interference of upper and lower sideband is suppressed allowing for approximate access of the optical field with direct-detection (DD)-RX, and CD induced distortion can be compensated. Either wavelength stability of filter and laser or effort for different synchronized drive voltages for the 2 MZM arms is critical. As CD impact scales with the square of the symbol rate, another approach - discrete multi-tone transmission (DMT) - may reduce CD induced ISI by modulating many subcarriers at low baud rate. This scheme may benefit from efficient implementation via serial-to-parallel conversion of the data stream, constellation mapping, inverse fast Fourier transformation followed by parallel-to-serial conversion. Thus, cross-talk (XT) between subcarriers and CD induced broadening are minimized simultaneously. By appropriate measures at TX (correlations of subband signals etc.) a real valued signal can be generated allowing for DML or EAM and avoiding a MZM. However, a linear modulator may be required and, if both sidebands are transmitted and DD at RX is employed, subband fading might exclude some spectral bands from transmitting data.

A further approach for dealing with CD can be described as related to measures at the receiver (RX). Coherent detection at optical front-end allows to detect amplitude, phase and polarization state of the optical field at RX, thus after blind or training-aided (TA) channel estimation all linear impairments can be compensated in electronic domain by digital signal processors and even simple low-cost transmitters can be used. Despite the opportunities provided by coherent reception, the RX structure is rather complex and may require a polarization beam splitter, a local oscillator, a 90° optical hybrid and balanced photo-diodes for each of the polarizations. Less complex RX structures try to reconstruct the full optical field from simultaneous measurements of amplitude and a quantity related to optical phase at the output of an asymmetric MZM. For reliable phase reconstruction a rather low extinction ratio at TX turned out to be advantageous.

Feedforward / Decision Feedback equalizers (FFE / DFE) applied after DD allow reducing ISI induced penalties to some extent. ISI induced penalties are typically reduced by compensating next neighbor symbol interferences. Volterra equalizers would be capable of recovering signal after field interference and direct detection; however it is very difficult to find the correct filter coefficients.

Maximum-likelihood Sequence Estimation (MLSE) for optical transmission systems can cope with larger amounts of CD than FFE/DFE approaches. TA or blind channel estimation and code-book generation in combination with efficient trellis decoding by Viterbi algorithm allow to reduce algorithmic complexity to implementable extent and to compensate for a channel impulse response length of about $\pm 3$ OOK symbols.

Nonetheless the algorithm scales exponentially with number of interfering symbols and levels of modulation format.

It is further known retrieving the phase of an optical field even if only the modulus data of the field are available. This fact has been recognized first in the context of 2D-image reconstruction for X-ray diffraction.

US 2013/071119 A1 discloses an apparatus comprising an optical transmitter that comprises a processor and at least one optical modulator. The processor is configured to generate electronic representations of at least two pre-dispersion-compensated phase-conjugated optical variants carrying a same modulated payload data for transmission. The at least one optical modulator is configured to modulate the electronic representations, wherein an amount of dispersion induced on the pre-dispersion-compensated phase-conjugated optical variants depends on an accumulated dispersion (AD) of a transmission link through which the pre-dispersion-compensated phase-conjugated optical variants are to be transmitted. The amount of dispersion induced on the phase-conjugated optical variants may be approximately -AD/2, where AD is the accumulated dispersion of the transmission link. The pre-dispersion-compensated phase-conjugated optical variants are different from one another in one or more dimensions such as the polarization of light, the time of transmission, the spatial localization, the optical carrier wavelength, or the subcarrier frequency during transmission.

US 2014/308046 A1 discloses systems and methods for optical multi-path interference (MPI) compensation. In an implementation, a mean MPI signal representing a mean amplitude of the MPI in an input signal is generated and subtracted from a first estimate of transmitted amplitude of the input signal to generate a mean MPI compensated estimate of transmitted amplitude. The mean MPI compensated estimate of transmitted amplitude is sliced to generate a decision of transmitted amplitude of the input signal. The mean MPI signal can be generated using a mean MPI feedback loop or using an iterative feed-forward process. In another implementation, mean MPI levels corresponding to respective transmitted intensity levels are generated and used to control slice levels of a slicer in order to compensate for MPI.

## SUMMARY

It may be seen as an object of the invention to reduce the expenses for estimating the phase of an optical signal.

This object is achieved by the features of the independent claims. Further implementation forms are apparent from the dependent claims, the description and the figures.

According to a first aspect of the invention, a receiver is provided which is configured for receiving optical signals via an optical transmission channel. The receiver comprises a control unit configured to determine amplitude and phase of a received optical signal, wherein the control unit is configured to

a) determine an estimated amplitude of a sent optical signal and an estimated phase of the sent optical signal based on a measured amplitude of the received optical signal, a predetermined phase of the received optical signal, and an inverse transmission function of the optical transmission channel;

b) determine an estimated amplitude of the received optical signal and an estimated phase of the received optical signal based on the estimated amplitude of the sent optical signal, the estimated phase of the sent optical signal, and a transmission function of the optical transmission channel;

c) replace the estimated amplitude of the received optical signal with a first amplitude value which is based on the measured amplitude of the received optical signal and to determine the estimated amplitude of the sent optical signal and the estimated phase of the sent optical signal based on the first amplitude value, a first phase value which is based on the estimated phase of the received optical signal, and the inverse transmission function of the optical transmission channel; and

d) determine an estimated amplitude of the received optical signal and an estimated phase of the received optical signal based on the estimated amplitude of the sent optical signal, an assumed phase of the sent optical signal, and the transmission function of the optical transmission channel.

The terms sent optical signal, sender signal, sent signal or the like and the corresponding terms related to the receiver, respectively, are used as synonyms in the context of this description. An optical transmission channel can be any transmission channel adapted and arranged for wire bound transmission of optical signals. For example, the optical transmission channel can be an optical fiber which is arranged to transmit optical signals. The receiver is configured to recognize the amplitude of a signal sequence sent by an optical transmitter.

The receiver may be a receiver which is configured to receive optical signals (modulated laser signals) via a wire bound optical transmission channel.

When referring to the transmission function of the optical fiber, this relates to the response function of the transmission channel when transmitting an optical signal from the sender to the receiver. The transmission function can be used to determine the received signal based on the sent signal. The inverse transmission function is the inverted transmission function of the transmission channel. The inverse transmission function can be used for determining the sent signal based on the received signal.

According to an implementation form of the first aspect of the invention, the sender signal (amplitude plus phase) can be determined because the phase of the signal at the sender is deemed constant and the inverse transmission function is known or its value is assumed for a first calculation step. Generally, the phase has to be determinable, either by its direct knowledge (for example if the phase is known to be constant) or by a known relationship between the amplitude of the sent optical signal and the phase of the sent optical signal.

The predetermined phase value is any default value to start the phase determination process at the receiver. The estimated amplitude and phase are the result of a calculation step. This calculation step may for example be implemented in the receiver by means of two separated calculation steps, namely: a) estimating the sender values based on the values measured at the receiver or at the receiving end and further based on the inverse transmission function of the optical transmission channel and b) estimating the receiver values based on the estimated sender values and further based on an assumption about the phase at the sender. The assumed phase is an assumption based on known properties of the sender.

The approach generally described above shall be further explained referring to an example:

The impact of the transmission function (signal transmission from sender to receiver) on a sent signal can be generally shown with the following formula:

$$(A_SP_S) * K = A_RP_R$$

where K is the transmission function, As is the amplitude of the sent signal at the sender (whose amplitude is unknown at the receiver), Ps is the phase of the sent signal (whose phase is also unknown at the receiver, either the sender's phase itself or its dependency on the amplitude of the sent optical signal may be required), $A_R$ is the amplitude of the received optical signal at the receiver (the amplitude is measured at the receiver), and $P_R$ is the phase of the received signal (initially unknown at the receiver).

Based on the above formula, the impact of the inverse transmission function (recovery of the sent signal based on the received signal) can be stated as follows:

$$A_SP_S = (A_RP_R) * K^{-1}$$

Generally, the control unit of the receiver described herein is configured to do the following, i.e. configured to carry out the following steps: Use the measured values (amplitude and phase) at the receiver in order to determine the corresponding values at the sender by using the inverse transmission function. Use the determined values at the sender in order to determine corresponding values at the receiver by using the transmission function. Replace the calculated values at the receiver with the factual values at the receiver (these values may in one embodiment be transformed by applying a formula or a parameter) and determine the values at the sender again by using the inverse transmission function and the replaced values (naturally, the values of the sent signal now differ from the previously determines ones, these new values can be referred to as modified sender values). Determine the values at the receiver again based on the modified sender values (again, as the sender values were subject to modification, the receiver values will also change). Thus, the sender values are approximated stepwise by calculating the amplitude and phase of the sent and received optical signal back and forth and by replacing the calculated values of the received optical signal with the measured values.

These steps can be carried out successively several times (by using the results of calculation step (n) as input values for step (n+1) according to the scheme presented above). With every iteration step, the phase of the received signal is calculated more precisely; even though only the amplitude of the received optical signal is known at the beginning, the estimation of the amplitude at the receiver and the replacement of the estimated amplitude at the receiver with the factual received amplitude results in obtaining better phase estimates of the received signal with each iteration step, based on the assumed transmission function and inverse transmission function of the optical transmission channel.

According to an implementation form of the first aspect, the first amplitude value corresponds to the measured amplitude of the received optical signal and the first phase value which corresponds to the estimated phase of the received optical signal.

The phase of the received optical signal is determined in an iterative process and with any additional step the accuracy of the phase estimation may be improved. The optical signal which is received at the receiver may particularly be an amplitude modulated signal which is detected by a simple direct-detection receiver. More complex and more costly receivers would allow measuring also the phase of the signal. Without knowledge of the (temporal) phase of the received optical signal it may not be (straight forward) possible to apply the inverse transmission function. Thus, chromatic dispersion as a result of the transmission characteristics of the transmission channel can't be equalized. The receiver described herein and its functioning reconstructs the missing phase at the receiver by the knowledge of the measured amplitude at receiver and by knowledge of at least the type of the phase at sender.

Depending on the modulation type at the sender, the generated signal may not only feature amplitude modulation but also specific phase modulation or chirp, which is referred to as type of the phase at the sender. High quality Mach-Zehnder modulators with well-balanced push-pull drivers impose negligible phase distortion whereas signals generated by electro-absorption modulators may exhibit mainly transient chirp so the phase distortion is related to the instantaneous optical power. Directly modulated laser have both transient and adiabatic chirp, and the relationship between optical power and phase is more complicated.

There are essentially four signal properties (which may be temporal) which are of relevance for the approach described herein: amplitude at sender, phase at sender, amplitude at receiver, phase at receiver (polarization properties are not of relevance for the approach described herein). Quite general, from any two known properties the other two signal properties can be found or retrieved, as described above. The inference of amplitude and phase at sender to amplitude and phase at receiver is trivial (mediated by known transmission function, see formula above) or the other way round (mediated by the inverse transmission function).

The receiver described herein makes use of the combination of known amplitude at receiver and known phase or phase type at sender, thus iterating to convergence: measured amplitude at RX, arbitrary phase at RX (START) → $K^{-1}$ → result: estimated amplitude and phase at TX → keep estimated amplitude and replace estimated phase by known (i.e. constant) one → propagate new estimated field to RX → K → result: estimated amplitude and phase at RX → again replace the property for which an accurate value is available, here: replace estimated amplitude by measured one, keep estimated phase, repeat these steps, if necessary.

The phase or the phase type at the sender ($P_S$) and the amplitude at the receiver ($A_R$) are known and the amplitude-modulated data at the sender must be reconstructed. The amplitudes at the sender and receiver can be determined from the transmission function (chromatic dispersion value) and based on these values the phase values at the sender and the receiver can be deducted (assuming known transmission function), allowing to characterize the sender (TX), as non-ideal TX like directly modulated lasers and others modulate both amplitude and phase of an optical field (with deterministic relationship) simultaneously.

The receiver described herein enables leaving the standard transmitter-receiver chain unchanged, and recovering data by iterated digital signal processing at the receiver. Thus, compensation of chromatic dispersion without knowledge of its magnitude and without introducing additional optical components is enabled.

This phase retrieval approach allows estimating the phase of the optical field at RX side with a single intensity measurement only avoiding complexity which is typically introduced by interference-based methods as asymmetric delay-line interferometry based or local oscillator based ones. Especially for high baud-rate short-haul connections with high OSNR (optical signal-to-noise ratio) but strong intersymbol interference, this approach may be advantageous.

Compared with high performance maximum likelihood sequence estimation the complexity of this approach does not scale exponentially but at most linearly with number of interfering symbols. Thus, phase retrieval of transmitted optical signals through a dispersive channel is enabled by using only a single direct detection receiver and a low-chirp transmitter for restoration of TX side signal, for estimation of chromatic dispersion, and for calculation of TX side magnitude-only pre-distortion.

According to a first implementation form of the first aspect of the invention as such, the control unit is configured to set the assumed phase of the sent optical signal to a constant value.

In other words, the signal sequence (i.e. the intensity envelope) at the sender is unknown, but the phase of the sender is known to be constant (which is the case, for example, for certain modulators, e.g. single drive Mach-Zehnder-Modulators). This assumption and knowledge about the phase of the sent signal may be advantageous for determining the phase of the received signal as described above.

A constant value of the phase results in that the signal can be expressed as a (high frequency) carrier (i.e. the optical wave at ~195THz) with amplitude modulation only (at frequencies of typically 50GHz). The approach described above is particularly of relevance in environments (i.e. data transmission scenarios) where the sender applies a constant phase to the transmitted optical signal and where the optical signal experiences strong inter-symbol interference induced by the transmission function.

According to a second implementation form of the first aspect of the invention as such, the control unit is configured to determine the assumed phase of the sent optical signal as a function of the estimated amplitude of the sent optical signal.

A relation between the phase and the amplitude of the sent optical signal is known or can be measured. This relation is typically a known correlation due to properties of the sender.

According to a third implementation form of the first aspect of the invention as such or according to one of the first or second implementation form of the first aspect, the control unit is configured to determine the amplitude and the phase of the received optical signal iteratively until the difference of the estimated phase of the sent optical signal in two consecutive iteration steps is below a predetermined threshold value.

In other words, the amplitude and the phase of the received optical signal is determined multiple times until said condition is met, while any subsequent determination step uses the results of the preceding determination step. The threshold value can be a relative value, for example 2% to 10% of the estimated value of the previous step; if the phase of the consecutive step differs from the phase of the previous step by less than said threshold value, the phase of the latest step is deemed the actual phase.

Alternatively or additionally, the control unit may be configured to carry out the steps mentioned above iteratively until the difference of the estimated phase of the sent optical signal and the assumed phase of the sent signal is below a predetermined threshold value, or until the difference of the estimated amplitude of the received optical signal and the measured amplitude of the received signal is below a predetermined threshold value, or until the difference of the estimated phase of the received optical signal in two consecutive iteration steps is below a predetermined threshold value.

With every iteration step the estimated phase of the transmitted optical signal approaches the actual value of the transmitted optical signal. Depending on the accuracy required for the phase, the iterations can be stopped after achieving the accuracy defined by the predetermined threshold value.

According to a fourth implementation form of the first aspect of the invention as such or according to one of the first to third implementation form of the first aspect, the receiver is configured to receive optical signals via a wire-bound optical transmission channel.

The approach described above is particularly of relevance for wire-bound optical signal transmission (in contrast to wireless optical signal transmission where the approach described herein may not lead to the same results as for wire-bound optical transmission).

According to a fifth implementation form of the first aspect of the invention as such or according to one of the first to fourth implementation form of the first aspect, the control unit is configured to adapt the transmission function and to determine the amplitude and the phase of the received optical signal according to one of the first to fourth implementation form of the first aspect and based on the adapted transmission function.

Thus, determination of the chromatic dispersion is enabled. If the initially assumed transmission function is not correct, the phase of the received signal may not be determined appropriately. Adapting the transmission function, particularly the chromatic dispersion value of the transmission function, allows determining the phase under an alternative transmission function. If such determination leads to a better result, e.g. the estimated amplitude and the actual amplitude of the received optical signal approaches the same value after fewer iteration steps, then the adapted transmission function is considered being closer to the actual transmission function and the phase of this iterative process is considered more accurate.

According to a sixth implementation form of the first aspect of the invention as such or according to one of the first to fifth implementation form of the first aspect, the control unit is configured to apply a given function to the estimated phase of the received optical signal, the estimated amplitude of the received optical signal, and the measured amplitude of the received optical signal in order to determine the first amplitude value and the first phase value.

In other words, the values at the receiver (either the determined ones or the measured ones) can be subject to a transformation process before the phase at the sender is determined.

A preferred implementation form comprises the following given function:

$$f = A_{R,estimate} * e^{i*P_{R,estimate}}/( A_{R,estimate}^2 + \varepsilon) * A_{R,measured}^2$$

$A_{R,first}$ = abs(f); % absolute value of f

$P_{s,first}$ = angle(f); % phase value of f

$\varepsilon$ being a positive real value much smaller than $max(A_{R,measured}^2)$

This may reduce the number of iterations until having achieved a reliable phase of the received signal or a reliable amplitude value of the sent optical signal.

According to a seventh implementation form of the first aspect of the invention as such or according to one of the first to sixth implementation form of the first aspect, the control unit is configured to generate a multitude of signal sequences out of the received optical signal sequence and to carry out the steps for determining the amplitude and the phase of the received optical signal on any one of the generated signal sequences.

The (serial) sequence of received optical signals is separated into blocks and for any one of the blocks the phase is determined separately. Thus, the phase determination for the different blocks can be carried out in parallel and the time for determining the phase of the received signal can be reduced.

According to an eighth implementation form of the first aspect of the invention as such or according to one of the first to seventh implementation form of the first aspect, the control unit is configured to generate the signal sequences such that the beginning of a second signal sequence overlaps the end of a first signal sequence, wherein the first signal sequence is the direct predecessor of the second signal sequence.

For example, out of the signal sequence of the symbols 1, 2, 3, 4, 5, 6, 7, 8, the following signal sequences of blocks may be generated: first block: 1, 2, 3, 4, 5; second block: 2, 3, 4, 5, 6. It can be seen that the beginning of the second block (symbols 2, 3, 4, 5) is identical to the end of the first block. Thus, the processing speed requirement of the iterative procedure is reduced.

According to a ninth implementation form of the first aspect of the invention according to the eighth implementation form of the first aspect, the control unit is configured to generate the signal sequences such that a part of the second signal sequence overlaps the first signal sequence.

For example, the first signal sequence may overlap between 25% and 50% of the second signal sequence, in particular 50%.

According to a tenth implementation form of the first aspect of the invention according to the eighth or ninth implementation form of the first aspect, the length of a signal sequence is a power of two.

Any signal sequence comprises multiple symbols and the number of symbols in a signal sequence is a power of two. Thus, the signal sequences may be processed without any preprocessing in subsequent modules or components, for example in modules for carrying out a Fast Fourier Transformation (FFT).

According to a second aspect of the invention, a system for transmitting optical signals is provided. The system comprises a sender, a receiver as described above and hereinafter, and a second transmission channel which connects the sender with the receiver. The sender is configured to transmit optical signals to the sender via a wire-bound optical connection and the second transmission channel is configured to transmit a signal sequence to the receiver, wherein the signal sequence is identical to a signal sequence transmitted via the wire-bound optical connection to the receiver. A control unit of the receiver is configured to use the signal sequence transmitted via the second transmission channel for determining the amplitude and the phase of a received optical signal, wherein the control unit is configured to determine the estimated amplitude of the received optical signal and the estimated phase of the received optical signal by replacing the estimated amplitude of the sent optical signal with the amplitude of the signal sequence transmitted via the second transmission channel.

The system enables calibration of the receiver as the sent optical signal is transmitted to the receiver via a (already calibrated) second transmission channel, where the second transmission channel can be any transmission channel which allows transmission of a symbol or signal sequence. The estimated phase of the received optical signal is in this aspect replaced with the amplitude of the signal sequence transmitted via the second transmission channel.

This may help calibrating the receiver to the wire-bound optical connection. If the original signal sequence sent by the sender is known at the receiver, the phase of the transmitted signal and of the received signal may be determined in fewer iteration steps.

According to a third aspect of the invention, a method for determining a phase of a received optical signal is provided. The optical signal is received via a wire-bound optical transmission channel and the method comprises the following steps:

a) measuring an amplitude of a received optical signal;

b) determining an estimated amplitude of a sent optical signal and an estimated phase of the sent optical signal based on the measured amplitude of the received optical signal, a predetermined phase of the received optical signal, and an inverse transmission function of the optical transmission channel;

c) determining an estimated amplitude of the received optical signal and an estimated phase of the received optical signal based on the estimated amplitude of the sent optical signal, the estimated phase of the sent optical signal, and a transmission function of the optical transmission channel;

d) replacing the estimated amplitude of the received optical signal with a first amplitude value which is based on the measured amplitude of the received optical signal and determining the estimated amplitude of the sent optical signal and the estimated phase of the sent optical signal based on the first amplitude value and a first phase value which is based on the estimated phase of the received optical signal, and an inverse transmission function of the optical transmission channel; and

e) replacing the estimated phase of the sent optical signal with an assumed phase of the sent optical signal determining the estimated amplitude of the received optical signal and the estimated phase of the received optical signal based on the estimated amplitude of the sent optical signal, the assumed phase of the sent optical signal, and a transmission function of the optical transmission channel.

The method of this aspect substantially corresponds to the actions carried out by the receiver described above. The details of the steps of the method are not repeated here, reference is made to the description of the receiver which applies to the method in a similar manner.

According to a first implementation form of the third aspect of the invention as such, the assumed phase of the sent optical signal is set to a constant value.

The assumed phase of the sent optical signal is firstly used after the steps a) to c) of the method have been carried out once and before beginning carrying out these steps the second time. Thus, the method steps a) to c) can be repeated multiple times under the conditions formulated under steps d) and e), i.e. by replacing said parameter values. In any one of the second and subsequent iteration steps, the same assumed value for the phase of the sent optical signal is used.

According to a second implementation form of the third aspect of the invention as such, the assumed phase of the sent optical signal is determined as a function of the estimated amplitude of the sent optical signal.

According to a third implementation form of the third aspect of the invention as such or according to the first or second implementation form of the third aspect, before step a), the transmission function of the optical transmission channel is set to a starting value and the method steps a) to e) are carried out iteratively multiple times with the set starting value of the transmission function and its inversion. The method further comprises: if the estimated phase of the optical signal does not converge to a phase value when using the starting value of the transmission function, the transmission function of the optical transmission channel is set to a second value and the method steps a) to e) are carried out iteratively multiple times with the second value of the transmission function and its inversion.

The starting value of the transmission function can be any arbitrary transmission function which corresponds to the type of transmission function expected when using said transmission channel. Converging to a phase value particularly implies that the estimated phase value approaches any phase value which can be referred to as limit value. The estimated phase constantly approaches the limit value, i.e. in a subsequent iteration step the estimated phase is closer to the limit value compared to the preceding iteration step. The steps relating to checking whether the estimated phase converges to a phase value can be carried out with the estimated phase of the received optical signal and/or with the estimated phase of the sent optical signal.

Whether or not the estimated phase converges a limit value can be determined as follows: the difference of the estimated phase of the sent optical signal in two consecutive iteration steps is becoming smaller when the number of iteration steps increases, or the difference of the estimated phase of the sent optical signal and the assumed phase of the sent signal is becoming smaller when the number of iteration steps increases, or the difference of the estimated amplitude of the received optical signal and the measured amplitude of the received signal is becoming smaller when the number of iteration steps increases, or the difference of the estimated phase of the received optical signal in two consecutive iteration steps is becoming smaller when the number of iteration steps increases.

This allows determining the chromatic dispersion of the optical transmission channel. It may occur that the starting value of the transmission function is not set correctly, therefore, the determined phase may probable not approach a phase value, if the chosen transmission function does not correspond to the actual transmission function. In such a case, the method steps are carried out again with another transmission function. This may be repeated multiple times, wherein the transmission function is adapted at any time when repeatedly starting carrying out steps a) to d) of the method. That one of the transmission functions is chosen as the correct one which results in a converging phase value of the received optical signal.

BRIEF DESCRIPTION OF THE FIGURES

Embodiments of the invention will be described with respect to the following figures, in which:

Fig. 1    schematically shows an approach for error reduction in the general case;

Fig. 2    schematically shows a method for iterative phase recovery and chromatic dispersion compensation;

Fig. 3    schematically shows a system for transmitting optical signals;

Fig. 4    schematically shows a receiver for receiving optical signals;

Fig. 5    schematically shows a system for transmitting optical signals.

The drawings are schematic and not to scale. If in the following drawings similar reference signs are used, they refer to similar or equivalent elements.

DETAILED DESCRIPTION OF EMBODIMENTS

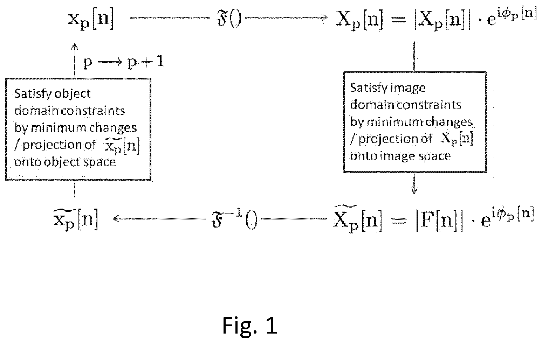

Fig. 1 shows an approach for iterative optical phase recovery and CD compensation. The phase of an optical field may be retrieved even if only the modulus data of the field are available. This fact has been recognized first in the context of 2D-image reconstruction for X-ray diffraction and has been described in R. W. Gerchberg, W. O. Saxton, "A Practical Algorithm for the Determination of the Phase from Image and Diffraction Plane Pictures", Optik 35, pp. 237-246 (1972). Here, object and image plane of an optical system are related by some transformation or mapping - e.g. by the 2D-Fourier transformation in case of diffraction. The optical phase in the object (or image) plane is to be found from measurements of either of intensities in object and image plane, intensity in image plane and phase in object plane, or intensity in object plane and support constraint in image plane.

Gerchberg and Saxton provided an iterative algorithm based on modulus data to solve this missing "phase problem". This algorithm for 1D or 2D image reconstruction is schematically shown in Fig. 1.

p denotes the iteration index. Lowercase letters denote quantities in object space, uppercase letters denote quantities in image (Fourier) space. Here, only the magnitude of the Fourier-transform $|F[n]|$ is assumed to be measurable, and object domain constraints might consist of the knowledge of support, of phase, intensity or some other a priori information. Starting with an initial guess for the phase of the Fourier transform, $\tilde{X}_p[n]$ is generated by $|F[n]|$ and transformed back to object space. $\tilde{x}_p[n]$ usually does not fulfill object space constraints, thus it is mapped with minimum changes onto admissible values. Depending on the constraints, these changes correspond to setting zero outside the support, to replace the magnitude by the corresponding measured one, by removing imaginary part in case of given constant phase in image plane etc. Then, $\tilde{x}_{p+1}[n]$ is transformed to image space and only the phase information is kept whereas the magnitude of $\tilde{X}_{p+1}[n]$ is replaced by the measured one.

By noticing the analogy between diffraction and the fact that for large CD values the electrical field of short pulses approaches in time domain the scaled Fourier transform of the pulses before transmission, the iterative method shown in Fig. 1 is adapted to dispersive pulse distortion with appropriate quantities. Here, the magnitude of the Fourier transform before is to be replaced by the square root of the measured intensity after transmission and the Fourier transformation by the CD propagation of the field. At TX, the imaginary part of the iterated field is removed (for chirp-free non-negative TX output) or the field is projected onto intensity-phase curve (for known TX chirp parameter).

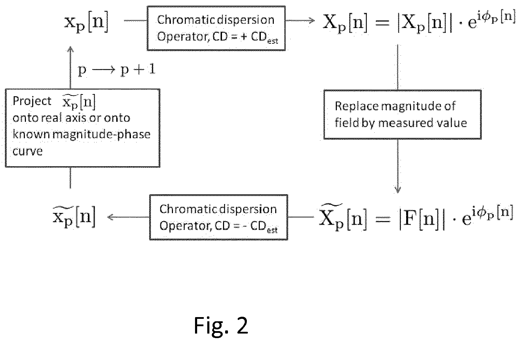

This approach is shown in Fig. 2.

The projection in image space (e.g. at RX) may be modified by setting a new amplitude value and a new phase value interdependently like

$$\widetilde{X_{\mathrm{p}}}[n] = \gamma \frac{X_{\mathrm{p}}[n]}{|X_{\mathrm{p}}[n]|^2 + \epsilon} |F[n]|^2$$

For the first few runs, the parameters $\gamma$ and $\epsilon$ may be set to act as low pass filter.

An implementation example of the approach shown and described with reference to figures 1 and/or 2 may be described as follows:

An NRZ-OOK transmitter model with adjustable transient chirp parameter may be used followed by an optical 2nd order Gaussian filter of 70% symbol rate bandwidth. The extinction ratio (ER) at TX side should not be chosen too large to enable reliable field reconstruction. Just as well, the DC component of the photodiode may be corrected in case the response differs from the high frequency range. In particular, ER may be set to 8 dB. Fiber propagation may be accomplished without nonlinear effects and without considering polarization mode dispersion (PMD). After noise loading, the signal may be filtered out by a 42GHz bandwidth interleaver and finally detected by a wide bandwidth pin diode.

For generation of 20-30Gb/s signals, a narrow linewidth laser source may be modulated by a single drive, low-chirp x-cut MZM with a $2^{11}$-1 PRBS sequence from a bit pattern generator (signal sequence to be transmitted via the transmission channel) whose output may amplified by an electrical driver to produce enough output voltage swing for the MZM. The resulting signal may be transmitted along n x 10km of SSMF (n = 0, 1, ... 7), attenuated and re-amplified by an EDFA (erbium doped fiber amplifier) with 20dB gain and attenuated again to comply with the pin diode input power of about 8 dBm. The receiver receives the transmitted signals.

The CD value of the transmission link can be determined within the retrieval process. Either the bit-error ratio (BER) or the eye-opening or the clock-tone magnitude can serve as cost function to be minimized or maximized, respectively.

By using the approach for phase retrieval as described herein, more than 60km of SSMF (>1000ps/nm) can be traversed. Combination of phase retrieval and short FIR filtering (9 taps with least mean square (LMS) directed gradient convergence of filter coefficients) may allow to compensate for about 1200ps/nm CD.

The approach for phase retrieval may also apply to higher order modulation formats, for example for application to PAM4 modulation for transmission over 50km SSMF and 40dB OSNR.

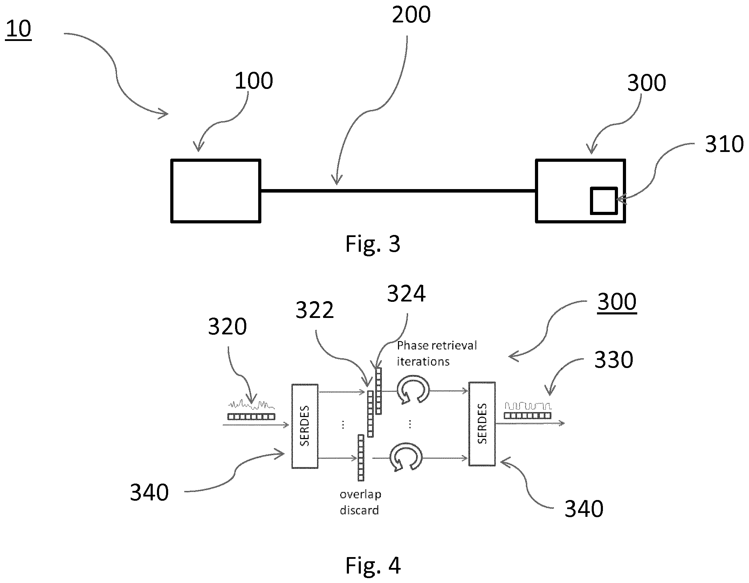

Fig. 3 shows a system 10 for transmitting optical signals, comprising a sender 100 and a receiver 300, wherein the sender and the receiver are communicatively connected for data transmission via a first transmission channel which is a wire-bound optical connection 200.

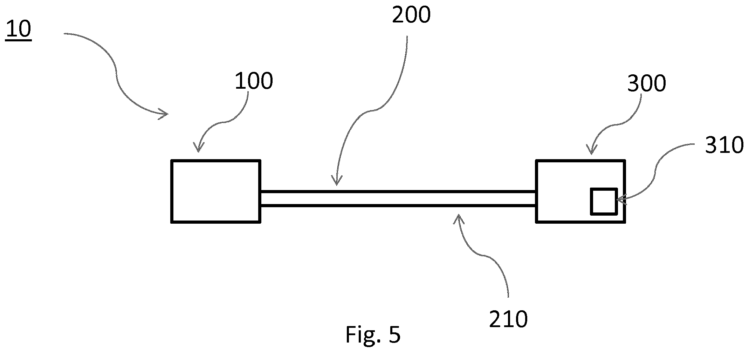

Fig. 5 shows a system 10 similar to the system of Fig. 3, wherein the system further comprises a second transmission channel 210 which connects the sender with the receiver. The sender 100 is configured to transmit optical signals to the sender via the wire-bound optical connection 200. The second transmission channel 210 is configured to transmit a signal sequence to the receiver 210, wherein the signal sequence is identical to a signal sequence transmitted via the wire-bound optical connection 200 to the receiver 300. The control unit 310 of the receiver 300 is configured to use the signal sequence transmitted via the second transmission channel 210 for determining the amplitude and the phase of an optical signal received via the wire-bound optical channel 200. The control unit 310 is configured to determine the estimated amplitude of the received optical signal and the estimated phase of the received optical signal by applying the approach described with reference to figures 1 and/or 2 and by replacing therein the estimated amplitude of the sent optical signal with the amplitude of the signal sequence transmitted via the second transmission channel.

Fig. 4 shows an embodiment of the receiver 300. Phase retrieval iterations may be accomplished by parallelization of operations. The incoming data steam (incoming signal sequence 320) can be split into several overlapping blocks (blocks 322 and 324). For example, two adjacent blocks may have an overlap of 50%, as indicated by the vertically overlapping section of the blocks 322 and 324 whose respective length in particular may exceed the CD impulse response (in general only a few symbols). Each block can be iterated independently with common CD estimate. Finally blocks are combined discarding overlap and are serialized afterwards. These operations (serialization, deserialization) are performed by respective components 340 of the receiver 300.

LIST OF REFERENCE SIGNS

| | |
|---|---|
| 10 | System for transmitting optical signals |
| 100 | Sender |
| 200 | optical transmission channel |
| 210 | second transmission channel |
| 300 | receiver |

310 control unit
320 incoming signal sequence
322 first block
324 second block
330 processed signal sequence
340 serializer/deserializer

**Claims**

1. A receiver (300), configured for receiving optical signals via an optical transmission channel (200), comprising a control unit (310) configured to determine an amplitude and a phase of a received optical signal, wherein the control unit is configured to

   a) determine an estimated amplitude of a sent optical signal and an estimated phase of the sent optical signal based on a measured amplitude of the received optical signal, a predetermined phase of the received optical signal, and an inverse transmission function of the optical transmission channel, wherein the predetermined phase can have any default value;
   b) determine an estimated amplitude of the received optical signal and an estimated phase of the received optical signal based on the estimated amplitude of the sent optical signal, the estimated phase of the sent optical signal, and a transmission function of the optical transmission channel;
   c) replace the estimated amplitude of the received optical signal with a first amplitude value which is based on the measured amplitude of the received optical signal and to determine the estimated amplitude of the sent optical signal and the estimated phase of the sent optical signal based on the first amplitude value, a first phase value which is based on the estimated phase of the received optical signal, and the inverse transmission function of the optical transmission channel; and
   d) determine an estimated amplitude of the received optical signal and an estimated phase of the received optical signal based on the estimated amplitude of the sent optical signal, an assumed phase of the sent optical signal, and the transmission function of the optical transmission channel, wherein the assumed phase is an assumption based on known properties of the sender.

2. The receiver (300) of claim 1, wherein the control unit (310) is configured to set the assumed phase of the sent optical signal to a constant value.

3. The receiver (300) of claim 1, wherein the control unit (310) is configured to determine the assumed phase of the sent optical signal as a function of the estimated amplitude of the sent optical signal.

4. The receiver (300) of any one of the preceding claims, wherein the control unit (310) is configured to determine the amplitude and the phase of the received optical signal iteratively until the difference of the estimated phase of the sent optical signal in two consecutive iteration steps is below a predetermined threshold value.

5. The receiver (300) of any one of the preceding claims wherein the receiver (300) is configured to receive optical signals via a wire-bound optical transmission channel.

6. The receiver (300) of any one of the preceding claims, wherein the control unit (310) is configured to adapt the transmission function and to determine the amplitude and the phase of the received optical signal according to one of the preceding claims and based on the adapted transmission function.

7. The receiver (300) of any one of the preceding claims, wherein the control unit (310) is configured to apply a given function to the estimated phase of the received optical signal, the estimated amplitude of the received optical signal, and the measured amplitude of the received optical signal in order to determine the first amplitude value and the first phase value.

8. The receiver (300) of any one of the preceding claims, wherein the control unit (310) is configured to generate a multitude of signal sequences out of the received optical signal sequence and to carry out the steps for determining the amplitude and the phase of the received optical signal on any one of the generated signal sequences.

9. The receiver (300) of claim 8,
wherein the control unit (310) is configured to generate the signal sequences such that the beginning of a second signal sequence overlaps the end of a first signal sequence, wherein the first signal sequence is the direct predecessor of the second signal sequence.

10. The receiver (300) of claim 9,
wherein the control unit (310) is configured to generate the signal sequences such that a part of the second signal sequence overlaps the first signal sequence.

11. The receiver (300) of claim 9 or 10,
wherein the number of symbols of a signal sequence is a power of two.

12. A system (10) for transmitting optical signals, comprising
a sender (100);
a receiver (300) according to any one of the preceding claims; and
a second transmission channel (210) which connects the sender with the receiver; wherein the sender (100) is configured to transmit optical signals to the sender via a wire-bound optical connection (200);
wherein the second transmission channel (210) is configured to transmit a signal sequence to the receiver (210), wherein the signal sequence is identical to a signal sequence transmitted via the wire-bound optical connection (200) to the receiver (300);
wherein a control unit (310) of the receiver (300) is configured to use the signal sequence transmitted via the second transmission channel (210) for determining the amplitude and the phase of a received optical signal;
wherein the control unit (310) is configured to determine the estimated amplitude of the received optical signal and the estimated phase of the received optical signal by replacing the estimated amplitude of the sent optical signal with the amplitude of the signal sequence transmitted via the second transmission channel.

13. A method for determining a phase of a received optical signal, which is received via a wire-bound optical transmission channel (200), wherein the method comprises the following steps:

a) measuring an amplitude of a received optical signal;
b) determining an estimated amplitude of a sent optical signal and an estimated phase of the sent optical signal based on the measured amplitude of the received optical signal, a predetermined phase of the received optical signal, and an inverse transmission function of the optical transmission channel, wherein the predetermined phase can have any default value;
c) determining an estimated amplitude of the received optical signal and an estimated phase of the received optical signal based on the estimated amplitude of the sent optical signal, the estimated phase of the sent optical signal, and a transmission function of the optical transmission channel;
d) replacing the estimated amplitude of the received optical signal with a first amplitude value which is based on the measured amplitude of the received optical signal and determining the estimated amplitude of the sent optical signal and the estimated phase of the sent optical signal based on the first amplitude value and a first phase value which is based on the estimated phase of the received optical signal, and an inverse transmission function of the optical transmission channel; and
e) replacing the estimated phase of the sent optical signal with an assumed phase of the sent optical signal determining the estimated amplitude of the received optical signal and the estimated phase of the received optical signal based on the estimated amplitude of the sent optical signal, the assumed phase of the sent optical signal, and a transmission function of the optical transmission channel, wherein the assumed phase is an assumption based on known properties of the sender.

14. The method of claim 13,
wherein the assumed phase of the sent optical signal is set to a constant value.

15. The method of claim 13,
wherein the assumed phase of the sent optical signal is determined as a function of the estimated amplitude of the sent optical signal.

**Patentansprüche**

1. Empfänger (300), der konfiguriert ist zum Empfangen von optischen Signalen über einen optischen Übertragungskanal (200),

   der eine Steuereinheit (310) umfasst, die konfiguriert ist zum Ermitteln einer Amplitude und einer Phase eines empfangenen optischen Signals, wobei die Steuereinheit konfiguriert ist zum:

   a) Ermitteln einer geschätzten Amplitude eines gesendeten optischen Signals und einer geschätzten Phase des gesendeten optischen Signals aufgrund einer gemessenen Amplitude des empfangenen optischen Signals, einer vorbestimmten Phase des empfangenen optischen Signals und einer inversen Übertragungsfunktion des optischen Übertragungskanals, wobei die vorbestimmte Phase einen beliebigen voreingestellten Wert aufweisen kann;

   b) Ermitteln einer geschätzten Amplitude des empfangenen optischen Signals und einer geschätzten Phase des empfangenen optischen Signals aufgrund der geschätzten Amplitude des gesendeten optischen Signals, der geschätzten Phase des gesendeten optischen Signals und einer Übertragungsfunktion des optischen Übertragungskanals;

   c) Ersetzen der geschätzten Amplitude des empfangenen optischen Signals durch einen ersten Amplitudenwert aufgrund der gemessenen Amplitude des empfangenen optischen Signals, und zum Ermitteln der geschätzten Amplitude des gesendeten optischen Signals und der geschätzten Phase des gesendeten optischen Signals aufgrund des ersten Amplitudenwerts, eines ersten Phasenwerts, der auf der geschätzten Phase des empfangenen optischen Signals beruht, und der inversen Übertragungsfunktion des optischen Übertragungskanals; und

   d) Ermitteln einer geschätzten Amplitude des empfangenen optischen Signals und einer geschätzten Phase des empfangenen optischen Signals aufgrund der geschätzten Amplitude des gesendeten optischen Signals, einer angenommenen Phase des gesendeten optischen Signals und der Übertragungsfunktion des optischen Übertragungskanals, wobei die angenommene Phase eine Annahme aufgrund bekannter Eigenschaften des Senders ist.

2. Empfänger (300) nach Anspruch 1,
   wobei die Steuereinheit (310) konfiguriert ist zum Einstellen der angenommenen Phase des gesendeten optischen Signals auf einen konstanten Wert.

3. Empfänger (300) nach Anspruch 1,
   wobei die Steuereinheit (310) konfiguriert ist zum Ermitteln der angenommenen Phase des gesendeten optischen Signals als eine Funktion der geschätzten Amplitude des gesendeten optischen Signals.

4. Empfänger (300) nach einem der vorhergehenden Ansprüche,
   wobei die Steuereinheit (310) konfiguriert ist zum iterativen Ermitteln der Amplitude und der Phase des empfangenen optischen Signals bis die Differenz der geschätzten Phase des gesendeten optischen Signals in zwei aufeinanderfolgenden Schritten unter einem vorbestimmten Schwellenwert liegt.

5. Empfänger (300) nach einem der vorhergehenden Ansprüche,
   wobei der Empfänger (300) konfiguriert ist zum Empfangen optischer Signale über einen kabelgebundenen optischen Übertragungskanal.

6. Empfänger (300) nach einem der vorhergehenden Ansprüche,
   wobei die Steuereinheit (310) konfiguriert ist zum Anpassen der Übertragungsfunktion und zum Ermitteln der Amplitude und der Phase des empfangenen optischen Signals nach einem der vorhergehenden Ansprüche und aufgrund der angepassten Übertragungsfunktion.

7. Empfänger (300) nach einem der vorhergehenden Ansprüche,
   wobei die Steuereinheit (310) konfiguriert ist zum Anwenden einer gegebenen Funktion auf die geschätzte Phase des empfangenen optischen Signals, die geschätzte Amplitude des empfangenen optischen Signals und die gemessene Amplitude des empfangenen optischen Signals, um den ersten Amplitudenwert und den ersten Phasenwert zu ermitteln.

8. Empfänger (300) nach einem der vorhergehenden Ansprüche,
   wobei die Steuereinheit (310) konfiguriert ist zum Erzeugen einer Vielzahl von Signalsequenzen aus der empfangenen optischen Signalsequenz und zum Ausführen der Schritte zum Ermitteln der Amplitude und der Phase des empfangenen optischen Signals an einer beliebigen der erzeugten Signalsequenzen.

9. Empfänger (300) nach Anspruch 8,
wobei die Steuereinheit (310) konfiguriert ist zum Erzeugen der Signalsequenzen, sodass der Beginn einer zweiten Signalsequenz das Ende einer ersten Signalsequenz überlagert, wobei die erste Signalsequenz der direkte Vorgänger der zweiten Signalsequenz ist.

10. Empfänger (300) nach Anspruch 9,
wobei die Steuereinheit (310) konfiguriert ist zum Erzeugen der Signalsequenzen, sodass ein Teil der zweiten Signalsequenz die erste Signalsequenz überlagert.

11. Empfänger (300) nach Anspruch 9 oder 10,
wobei die Anzahl der Symbole einer Signalsequenz eine Zweierpotenz ist.

12. System (10) zum Übertragen von optischen Signalen, umfassend:

einen Sender (100);
einen Empfänger (300) nach einem der vorhergehenden Ansprüche; und
einen zweiten Übertragungskanal (210), der den Sender mit dem Empfänger verbindet;
wobei der Sender (100) konfiguriert ist zum Übertragen von optischen Signalen über eine kabelgebundene optische Verbindung (200) an den Sender;
wobei der zweite Übertragungskanal (210) konfiguriert ist zum Übertragen einer Signalsequenz an den Empfänger (210), wobei die Signalsequenz identisch zu einer Signalsequenz ist, die über die kabelgebundene optische Verbindung (200) an den Empfänger (300) übertragen wird;
wobei eine Steuereinheit (310) des Empfängers (300) konfiguriert ist zum Verwenden der Signalsequenz, die über den zweiten Übertragungskanal (210) übertragen wird, um die Amplitude und die Phase eines empfangenen optischen Signals zu ermitteln;
wobei die Steuereinheit (310) konfiguriert ist zum Ermitteln der geschätzten Amplitude des empfangenen optischen Signals und der geschätzten Phase des empfangenen optischen Signals, indem die geschätzte Amplitude des gesendeten optischen Signals durch die Amplitude der Signalsequenz ersetzt wird, die über den zweiten Übertragungskanal übertragen wird.

13. Verfahren zum Ermitteln einer Phase eines empfangenen optischen Signals, das über einen kabelgebundenen optischen Übertragungskanal (200) empfangen wird, wobei das Verfahren die folgenden Schritte umfasst:

a) Messen einer Amplitude eines empfangenen optischen Signals;
b) Ermitteln einer geschätzten Amplitude eines gesendeten optischen Signals und einer geschätzten Phase des gesendeten optischen Signals aufgrund der gemessenen Amplitude des empfangenen optischen Signals, einer vorbestimmten Phase des empfangenen optischen Signals und einer inversen Übertragungsfunktion des optischen Übertragungskanals, wobei die vorbestimmte Phase einen beliebigen voreingestellten Wert aufweisen kann;
c) Ermitteln einer geschätzten Amplitude des empfangenen optischen Signals und einer geschätzten Phase des empfangenen optischen Signals aufgrund der geschätzten Amplitude des gesendeten optischen Signals, der geschätzten Phase des gesendeten optischen Signals und einer Übertragungsfunktion des optischen Übertragungskanals;
d) Ersetzen der geschätzten Amplitude des empfangenen optischen Signals durch einen ersten Amplitudenwert, der auf der gemessenen Amplitude des empfangenen optischen Signals beruht, und Ermitteln der geschätzten Amplitude des gesendeten optischen Signals und der geschätzten Phase des gesendeten optischen Signals aufgrund des ersten Amplitudenwerts, eines ersten Phasenwerts, der auf der geschätzten Phase des empfangenen optischen Signals beruht, und einer inversen Übertragungsfunktion des optischen Übertragungskanals; und
e) Ersetzen der geschätzten Phase des gesendeten optischen Signals durch eine angenommene Phase des gesendeten optischen Signals, indem die geschätzte Amplitude des empfangenen optischen Signals und die geschätzte Phase des empfangenen optischen Signals aufgrund der geschätzten Amplitude des gesendeten optischen Signals, der angenommenen Phase des gesendeten optischen Signals und einer Übertragungsfunktion des optischen Übertragungskanals ermittelt wird, wobei die angenommene Phase eine Annahme aufgrund bekannter Eigenschaften des Senders ist.

**14.** Verfahren nach Anspruch 13,
wobei die angenommene Phase des gesendeten optischen Signals auf einen konstanten Wert eingestellt wird.

**15.** Verfahren nach Anspruch 13,
wobei die angenommene Phase des gesendeten optischen Signals als eine Funktion der geschätzten Amplitude des gesendeten optischen Signals ermittelt wird.

**Revendications**

**1.** Récepteur (300), configuré pour recevoir des signaux optiques par le biais d'un canal de transmission optique (200), comprenant une unité de commande (310) configurée pour déterminer une amplitude et une phase d'un signal optique reçu, dans lequel l'unité de commande est configurée pour :

a) déterminer une amplitude estimée d'un signal optique envoyé et une phase estimée du signal optique envoyé sur la base d'une amplitude mesurée du signal optique reçu, d'une phase prédéterminée du signal optique reçu et d'une fonction de transmission inverse du canal de transmission optique, dans lequel la phase prédéterminée peut présenter une quelconque valeur par défaut ;

b) déterminer une amplitude estimée du signal optique reçu et une phase estimée du signal optique reçu sur la base de l'amplitude estimée du signal optique envoyé, de la phase estimée du signal optique envoyé, et d'une fonction de transmission du canal de transmission optique ;

c) remplacer l'amplitude estimée du signal optique reçu par une première valeur d'amplitude qui est basée sur l'amplitude mesurée du signal optique reçu et pour déterminer l'amplitude estimée du signal optique envoyé et la phase estimée du signal optique envoyé sur la base de la première valeur d'amplitude, d'une première valeur de phase qui est basée sur la phase estimée du signal optique reçu, et de la fonction de transmission inverse du canal de transmission optique ; et

d) déterminer une amplitude estimée du signal optique reçu et une phase estimée du signal optique reçu sur la base de l'amplitude estimée du signal optique envoyé, d'une phase présumée du signal optique envoyé et de la fonction de transmission du canal de transmission optique, dans lequel la phase présumée est une présomption basée sur des propriétés connues de l'expéditeur.

**2.** Récepteur (300) selon la revendication 1,
dans lequel l'unité de commande (310) est configurée pour définir la phase présumée du signal optique envoyé sur une valeur constante.

**3.** Récepteur (300) selon la revendication 1,
dans lequel l'unité de commande (310) est configurée pour déterminer la phase présumée du signal optique envoyé en tant que fonction de l'amplitude estimée du signal optique envoyé.

**4.** Récepteur (300) selon l'une quelconque des revendications précédentes,
dans lequel l'unité de commande (310) est configurée pour déterminer l'amplitude et la phase du signal optique reçu de manière itérative jusqu'à ce que la différence de la phase estimée du signal optique envoyé dans deux étapes d'itération consécutives se situe sous une valeur de seuil prédéterminée.

**5.** Récepteur (300) selon l'une quelconque des revendications précédentes,
dans lequel le récepteur (300) est configuré pour recevoir des signaux optiques par le biais d'un canal de transmission optique à liaison filaire.

**6.** Récepteur (300) selon l'une quelconque des revendications précédentes,
dans lequel l'unité de commande (310) est configurée pour adapter la fonction de transmission et pour déterminer l'amplitude et la phase du signal optique reçu selon l'une des revendications précédentes et sur la base de la fonction de transmission adaptée.

**7.** Récepteur (300) selon l'une quelconque des revendications précédentes,
dans lequel l'unité de commande (310) est configurée pour appliquer une fonction donnée à la phase estimée du signal optique reçu, l'amplitude estimée du signal optique reçu et l'amplitude mesurée du signal optique reçu afin de déterminer la première valeur d'amplitude et la première valeur de phase.

**8.** Récepteur (300) selon l'une quelconque des revendications précédentes,
dans lequel l'unité de commande (310) est configurée pour générer une multitude de séquences de signaux de la séquence de signaux optiques reçus et pour mettre en œuvre les étapes permettant de déterminer l'amplitude et la phase du signal optique reçu sur l'une quelconque des séquences de signaux générées.

**9.** Récepteur (300) selon la revendication 8,
dans lequel l'unité de commande (310) est configurée pour générer les séquences de signaux de sorte que le début d'une seconde séquence de signaux chevauche la fin d'une première séquence de signaux, dans lequel la première séquence de signaux est la prédécesseure directe de la seconde séquence de signaux.

**10.** Récepteur (300) selon la revendication 9,
dans lequel l'unité de commande (310) est configurée pour générer les séquences de signaux de sorte qu'une partie de la seconde séquence de signaux chevauche la première séquence de signaux.

**11.** Récepteur (300) selon la revendication 9 ou 10,
dans lequel le nombre de symboles d'une séquence de signaux est une puissance de deux.

**12.** Système (10) permettant de transmettre des signaux optiques, comprenant :

un expéditeur (100) ;
un récepteur (300) selon l'une quelconque des revendications précédentes ; et
un second canal de transmission (210) qui connecte l'expéditeur au récepteur ;
dans lequel l'expéditeur (100) est configuré pour transmettre des signaux optiques à l'expéditeur par le biais d'une connexion optique à liaison filaire (200) ;
dans lequel le second canal de transmission (210) est configuré pour transmettre une séquence de signaux au récepteur (210), dans lequel la séquence de signaux est identique à une séquence de signaux transmise par le biais d'une connexion optique à liaison filaire (200) au récepteur (300) ;
dans lequel une unité de commande (310) du récepteur (300) est configurée pour utiliser la séquence de signaux transmise par le biais du second canal de transmission (210) pour déterminer l'amplitude et la phase d'un signal optique reçu ;
dans lequel l'unité de commande (310) est configurée pour déterminer l'amplitude estimée du signal optique reçu et la phase estimée du signal optique reçu en remplaçant l'amplitude estimée du signal optique envoyé par l'amplitude de la séquence de signaux transmise par le biais du second canal de transmission.

**13.** Procédé permettant de déterminer une phase d'un signal optique reçu, qui est reçu par le biais d'un canal de transmission optique à liaison filaire (200), dans lequel le procédé comprend les étapes suivantes :

a) mesurer une amplitude d'un signal optique reçu ;
b) déterminer une amplitude estimée d'un signal optique envoyé et une phase estimée du signal optique envoyé sur la base de l'amplitude mesurée du signal optique reçu, une phase prédéterminée du signal optique reçu et une fonction de transmission inverse du canal de transmission optique, dans lequel la phase prédéterminée peut présenter une quelconque valeur par défaut ;
c) déterminer une amplitude estimée du signal optique reçu et une phase estimée du signal optique reçu sur la base de l'amplitude estimée du signal optique envoyé, la phase estimée du signal optique envoyé et une fonction de transmission du canal de transmission optique ;
d) remplacer l'amplitude estimée du signal optique reçu par une première valeur d'amplitude qui est basée sur l'amplitude mesurée du signal optique reçu et déterminer l'amplitude estimée du signal optique envoyé et la phase estimée du signal optique envoyé sur la base de la première valeur d'amplitude et d'une première valeur de phase qui est basée sur la phase estimée du signal optique reçu, et une fonction de transmission inverse du canal de transmission optique ; et
e) remplacer la phase estimée du signal optique envoyé par une phase présumée du signal optique envoyé déterminant l'amplitude estimée du signal optique reçu et la phase estimée du signal optique reçu sur la base de l'amplitude estimée du signal optique envoyé, de la phase présumée du signal optique envoyé et d'une fonction de transmission du canal de transmission optique, dans lequel la phase présumée est une présomption basée sur des propriétés connues de l'expéditeur.

**14.** Procédé selon la revendication 13,
dans lequel la phase présumée du signal optique envoyé est définie sur une valeur constante.

**15.** Procédé selon la revendication 13,
dans lequel la phase présumée du signal optique envoyé est déterminée en tant que fonction de l'amplitude estimée du signal optique envoyé.

$$x_p[n] \xrightarrow{\quad \mathfrak{F}() \quad} X_p[n] = |X_p[n]| \cdot e^{i\phi_p[n]}$$

$p \longrightarrow p+1$

Satisfy object
domain constraints
by minimum changes
/ projection of $\widetilde{x_p}[n]$
onto object space

Satisfy image
domain constraints
by minimum changes
/ projection of $X_p[n]$
onto image space

$$\widetilde{x_p}[n] \xleftarrow{\quad \mathfrak{F}^{-1}() \quad} \widetilde{X_p}[n] = |F[n]| \cdot e^{i\phi_p[n]}$$

Fig. 1

EP 3 345 314 B1

$x_p[n]$ → Chromatic dispersion Operator, CD = + CD$_{est}$ → $X_p[n] = |X_p[n]| \cdot e^{i\phi_p[n]}$

$p \longrightarrow p+1$

Project $\widetilde{x_p}[n]$ onto real axis or onto known magnitude-phase curve

Replace magnitude of field by measured value

$\widetilde{x_p}[n]$ ← Chromatic dispersion Operator, CD = - CD$_{est}$ ← $\widetilde{X_p}[n] = |F[n]| \cdot e^{i\phi_p[n]}$

Fig. 2

Fig. 3

Fig. 4

EP 3 345 314 B1

Fig. 5

**EP 3 345 314 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013071119 A1

- US 2014308046 A1

**Non-patent literature cited in the description**

- **R. W. GERCHBERG ; W. O. SAXTON.** A Practical Algorithm for the Determination of the Phase from Image and Diffraction Plane Pictures. *Optik,* 1972, vol. 35, 237-246